# EUROPEAN PATENT APPLICATION

(11) **EP 4 224 682 A1**
(43) Date of publication of application: **09.08.2023**
(21) Application number: 22155273.0
(22) Date of filing: 04.02.2022
(51) Int. Cl.: H02K 7/00, H02K 13/00, H02K 13/02

(54) **ELECTRICAL CONNECTING ASSEMBLY FOR A SEPARATELY EXCITED ROTOR**

(71) Applicant: Valeo eAutomotive Germany GmbH, 91056 Erlangen (DE)
(72) Inventor: Wolf, Nico, 97616 Bad Neustadt a.d.Saale (DE); Bach, Regina, 97616 Bad Neustadt a.d.Saale (DE); Wieczorek, Christoph, 97616 Bad Neustadt a.d.Saale (DE); Siepker, Carsten, 97616 Bad Neustadt a.d.Saale (DE); Finger-Albert, Christian, 97616 Bad Neustadt a.d.Saale (DE); Förtsch, Steffen, 97616 Bad Neustadt a.d.Saale (DE)
(74) Representative: Valeo Powertrain Systems

(57) **Abstract**

The invention concerns a rotor (1) comprising a rotor shaft (4) configured to rotate around an axis (X) of rotation, a rotor body (2) formed of a stack of laminations, a field coil (3) wound around the rotor body (2), at least one slip ring (110) configured to exchange electric power with an external power supply, the at least one slip ring (110) being electrically connected to an end (31) of the field coil (3) through an electrical connecting assembly (10) comprising an axial electrical conductor (120) and a radial electrical conductor (130), the axial electrical conductor (120) passing through an axial bore (41) of the rotor shaft (4), the radial electrical conductor (130) passing through a radial bore (42) of the rotor shaft (4), the axial electrical conductor (120) and the radial electrical conductor (130) being two separate pieces configured to be electrically connected together.

## Description

### FIELD OF THE INVENTION

The present invention belongs to the field of rotary electric machines configured to be on board of an automotive vehicle, such as an electric vehicle (EV) or a hybrid vehicle (HV).

The present invention relates in particular to the field of separately excited rotors, also called wound rotors or slip ring rotors, integrated to rotary electric machines.

### BACKGROUND OF THE INVENTION

As is known, an electric or a hybrid automotive vehicle comprises an electric drive comprising a rotary electric machine which needs to be supplied with electric power, for instance by a high voltage power supply battery, to deliver a mechanical power in order to ensure the propulsion of the vehicle.

In a general manner, the rotary electric machine comprises a stator, referring to a fixed part of the rotary electric machine, and a rotor, referring to a rotating part of the rotary electric machine. The rotor then comprises a rotor shaft configured to ensure the transmission of the mechanical power between the rotary electric machine and an exterior driven apparatus, notably the wheels of the vehicle.

In particular, it is known to have the rotor separately excited. This type of rotors is commonly referred as wound rotors or slip ring rotors. Such a rotor comprises a rotor body formed of a stack of laminations and having a plurality of teeth projecting radially, and a field coil (which may comprise several single coils each having a plurality of windings) wound around the plurality of teeth. Then, the field coil is connected to an external power supply through slip rings. The slip rings correspond to electro-mechanical devices configured to allow the exchange of electric power between the field coil, which rotates with the rotor, and the external power supply, which is fixed.

The slip rings are then respectively connected to a corresponding end of the field coil through electrical connectors. Mounting the electrical connectors can be a tedious task. Moreover, in the context of the rotary electric machine for the electric or hybrid vehicles, the rotor is designed to rotate at high speeds, which may affect the holding of the field coil and of the electrical connectors due to centrifugal forces.

In this context, the main objective of the present invention is to provide a rotor with an electrical connecting assembly between the field coil and the slip rings, that has an improved mechanical holding and that is easier to produce.

### SUMMARY OF THE INVENTION

More precisely, the present invention concerns a rotor for a rotary electric machine, the rotor comprising a rotor shaft configured to rotate around an axis of rotation, a rotor body formed of a stack of laminations and being configured to be mounted coaxially on the rotor shaft, a field coil wound around the rotor body, and at least one slip ring. The at least one slip ring is mounted on the rotor shaft and is configured to exchange electric power with an external power supply.

Then, each of the at least one slip ring is electrically connected to an end of the field coil through an electrical connecting assembly comprising an axial electrical conductor and a radial electrical conductor. On one hand, the axial electrical conductor is electrically connected to the respective slip ring and passes through an axial bore of the rotor shaft. On another hand, the radial electrical conductor is electrically connected to the respective end of the field coil and passes through a radial bore of the rotor shaft. The axial electrical conductor and the radial electrical conductor are two separate pieces configured to be electrically connected together.

Using the two separate pieces as in the present invention gives the substantial advantage of not having to use deformable electrical connectors for the electrical connection between the field coil and the slip rings. In fact, in the state-of-the-art technology, a conventional solution is to use a wire passing through an inner channel of the rotor shaft, which would have to be shaped inside the rotor shaft. And this shaping operation involves complex manual steps. In a more general manner, deformable electrical connectors are more complex to shape, to mount, and to keep stably fixed through the in-service life of the rotor, especially when the rotor rotates at high speeds. The invention thus considerably facilitates the manufacturing of the rotor by easing the setting up of the electrical connection between the field coil and the slip rings. Consequently, the related time and cost of production of the rotor are reduced. The invention also provides a more stable positioning of the electrical connection between the field coil and the slip rings through the in-service life of the rotor.

Advantageously, the axial electrical conductor is directly electrically connected to the respective slip ring. The electrical connection between the slip ring and the axial electrical conductor is consequently more robust through the in-service life of the rotor.

Advantageously, the at least one slip ring and the axial electrical conductor are at least partially embedded in a holding element. Then, the at least one slip ring, the axial electrical conductor, and the holding element form together a slip ring assembly. The use of the slip ring assembly allows to have a standardized sub-assembly which is easier to mount on the rotor shaft, and allows at a same time to ensure the electrical insulation between the at least one slip ring and the rotor shaft, and between the axial electrical conductor and the rotor shaft. Moreover, the slip ring assembly provides advantageously a mechanical holding of the at least one slip ring and of the axial electrical conductor, which thus improves the stability of the electrical connection through the in-service life of the rotor.

Advantageously, the slip ring assembly is substantially rigid. Substantially rigid components are easier to mount and provide a more stable positioning of the electrical connecting assembly through the in-service life of the rotor.

Advantageously, the radial electrical conductor is substantially rigid.

Advantageously, the radial electrical conductor comprises a protruding portion projecting from a radial portion of the radial electrical conductor and towards the field coil such that the radial electrical conductor is connected to the respective end of the field coil at an axial position of the field coil. The use of the protruding portion gives the advantage that the electrical connection between the respective end of the field coil and the radial electrical conductor is closer to the field coil. Thus, the length of the respective end of the field coil is advantageously reduced.

Advantageously, the radial electrical conductor is overmolded with an insulation material. The overmolded radial electrical conductor allows to ensure the electrical insulation between the rotor shaft and the radial electrical conductor.

Advantageously, the axial electrical conductor and the radial electrical conductor are screwed, clutched, welded, soldered, pressed and/or crimped together.

Advantageously, the radial electrical conductor and the respective end of the field coil are crimped, welded, soldered, pressed, screwed and/or clutched together.

Advantageously, the rotor comprises two slip rings and two electrical connecting assemblies electrically connecting respectively the corresponding slip ring to the corresponding end of the field coil. The two axial electrical conductors and the two radial electrical conductors of the two electrical connecting assemblies are notably accommodated on two substantially diametrically opposed locations of the rotor shaft.

Advantageously, the two slip rings and the two axial electrical conductors are at least partially embedded in the holding element. Then, the two slip rings, the two axial electrical conductors, and the holding element form together the slip ring assembly. The slip ring assembly eases the manufacturing of the rotor, as there is a reduced number of pieces to be mounted on the rotor shaft, compared to a conventional solution in which all the slips rings and the electrical connectors would have been separate pieces. Moreover, the slip rings and the axial electrical conductors are advantageously more stably fixed thanks to the holding element.

Advantageously, the rotor comprises a cover located at an axial end of the rotor body such that to cover the field coil and the radial electrical conductor, and a potting material which fills free space between the cover and the field coil.

According to an aspect of the invention, the invention relates to the rotary electric machine comprising the rotor as described previously and a stator.

Another aspect of the invention is the electric drive, comprising the rotary electric machine and an inverter configured to convert a direct current voltage coming from a high-voltage power supply battery into an alternating current voltage so as to supply the stator of the rotary electric machine with the AC voltage. The AC voltage may be a multiphase AC voltage, especially a three-phase voltage. The rotor is advantageously supplied with a DC voltage. Preferably, a unique power converter is used for supplying both the AC voltage to the stator and the DC voltage to the rotor.

A further aspect of the invention is an electric or a hybrid vehicle, comprising the electric drive for driving the vehicle. The vehicle may comprise the high-voltage power supply battery, preferably a rechargeable battery for providing the DC voltage to the inverter, if applicable.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

The invention will be better understood on reading the description that follows, and by referring to the appended drawings given as non-limiting examples, in which identical references are given to similar objects and in which:
Figure 1 is a schematic view of a rotor according to an embodiment of the invention;
Figure 2 is a schematic partial cut view of the rotor according to an embodiment of the invention;
Figures 3 and 4 are schematic partial cut views of the rotor according to an embodiment of the invention;
Figure 5 is a schematic cut view of a slip ring assembly for the rotor according to an embodiment of the invention;
Figure 6 is a schematic cut view of a radial electrical conductor for the rotor according to an embodiment of the invention;
Figure 7 is a schematic picture of an automotive electric or hybrid vehicle comprising a rotary electric machine with the rotor according to an embodiment of the invention.

### DETAILED DESCRIPTION

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

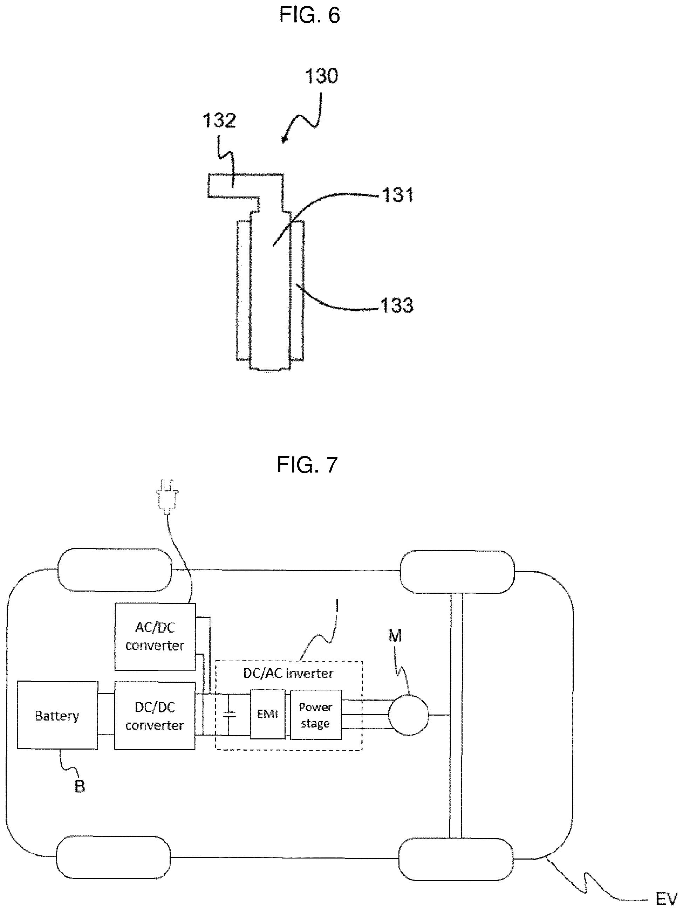

In reference to Figure 7, an aspect of the invention is an electric vehicle or a hybrid electric automotive vehicle EV comprising wheels and an electric drive configured to drive at least indirectly at least one of the wheels of the vehicle. The vehicle may comprise a high-voltage power supply battery B, preferably a rechargeable battery, for providing electric power to the electric drive. Although, the invention is not limited to this domain.

Another aspect of the invention is the electric drive comprising a rotary electric machine M and an inverter I configured to convert a direct current (DC) voltage coming from the high-voltage power supply battery B into an alternating current (AC) voltage in order to supply a stator of the rotary electric machine M with AC voltage. The rotary electric machine M may in particular be a three-phase rotary electric machine supplied with a three-phase AC voltage. A rotor of the rotary electric machine is advantageously supplied with a DC voltage. Preferably, a unique power converter is used for supplying both the AC voltage to the stator and the DC voltage to the rotor.

The invention also relates to the rotary electric machine comprising the stator, referring to a fixed part of the rotary electric machine, and the rotor, referring to a rotating part of the rotary electric machine. The rotor is, in particular, an electric excited rotor, also commonly referred as a wound rotor or a slip ring rotor. More precisely, the stator has an annular shape and surrounds coaxially the rotor. Then, the rotary electric machine comprises a casing covering both the stator and the rotor. Ordinarily, the stator comprises a stator body formed of a stack of stator laminations having a plurality of stator teeth projecting radially, and stator windings wound around the stator teeth.

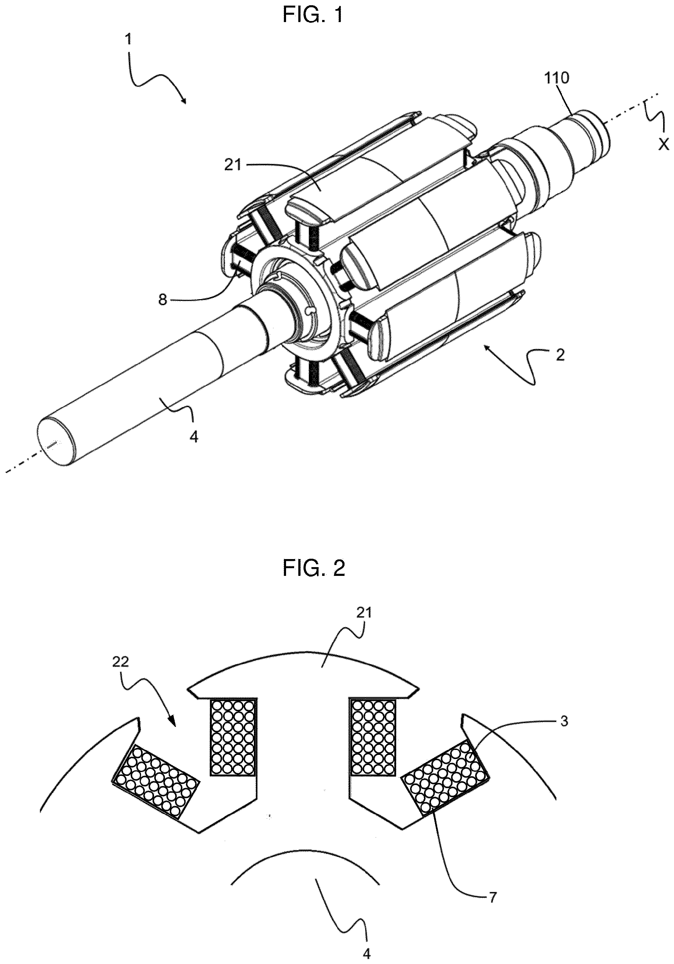

Figure 1 discloses a schematic partial view of an example of the rotor 1 according to a further aspect of the invention. The rotor 1 comprises a rotor shaft 4 configured to rotate around an axis X of rotation, a rotor body 2 formed of a stack of laminations and being configured to be mounted coaxially on the rotor shaft 4, and at least one field coil wound around the rotor body 2 (the field coil is not represented in Figure 1). The laminations are especially stacked along the axis X of rotation. The rotor body 2 may be for instance press-fitted on the rotor shaft 4.

Figure 2 illustrates a partial cut view of an example of the rotor. More specifically, the rotor body 2 has a plurality of teeth 21 projecting radially and slots 22 corresponding to spaces between adjacent teeth of the plurality of teeth 21. The plurality of teeth 21 may notably comprise four, six, or eight teeth for example. Then, the field coil 3 is especially wound around each tooth of the plurality of teeth 21, passing through the slots 22, and forming coil ends projecting axially from respectively two axial ends of the rotor body 2.

The rotor may also present an insulation system 7 arranged on walls of the slots 22 between the rotor body 2 and the field coil 3 such that to electrically insulate the rotor body 2 from the field coil 3. More specifically, the walls of the slots 22 correspond to faces of the rotor body 2 directed towards the slots 22. Then, the insulation system 7 may be for example an insulation paper.

The rotor 1 may further comprise two end plates 8, as represented in Figure 1, configured to come respectively against the two axial ends of the rotor body 2. Then, the field coil advantageously passes over the two end plates 8. In other words, the two end plates 8 are located between the rotor body 2 and the coil ends of the field coil 3 such that to electrically insulate axially the field coil from the rotor body 2.

The rotor 1 may also comprise two covers located at the two axial ends of the rotor body 2 such that to cover the field coil, and a potting material which fills free space between each one of the two covers and the field coil. The potting material contributes advantageously to the fixation of the field coil, such that the rotor has an improved resistance to centrifugal forces.

With reference to Figure 1, the field coil is then connected to an external power supply through at least one slip ring 110 mounted on the rotor shaft 4, namely on an axial end of the rotor shaft 4. The slip rings especially correspond to electro-mechanical devices configured to allow the exchange of electric power between a rotating element and a fixed element, here respectively the field coil and the external power supply. Then, each of the at least one slip ring is electrically connected to another end of the field coil through an electrical connecting assembly.

In particular, the rotor may have two different types of poles, respectively positive poles and negative poles, the plurality of teeth presenting an alternance of a tooth corresponding to a positive pole, and of a tooth corresponding to a negative pole. Then, the rotor has advantageously two slip rings and two corresponding electrical connecting assemblies. Each one of the two electrical connecting assemblies electrically connects respectively the corresponding slip ring to a corresponding end of the field coil. Although, the rotor may comprise another number of slip rings, given that each one of the slip rings has a corresponding electrical connecting assembly and a corresponding end of a field coil (the rotor may comprise more than one field coil).

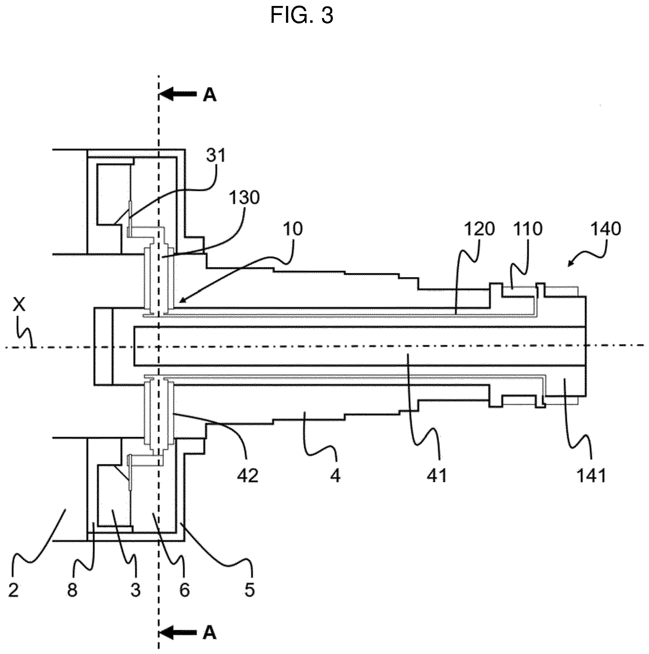

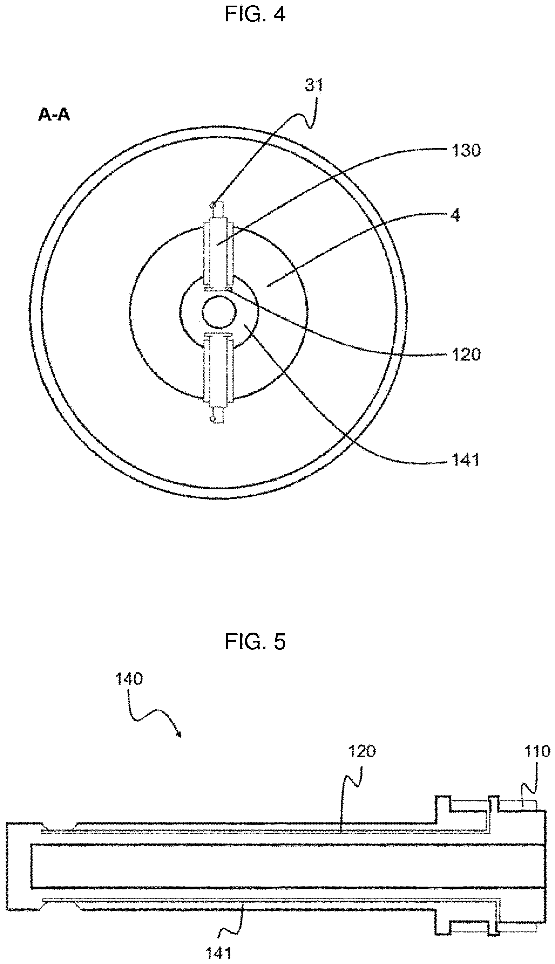

Figure 3 and 4 illustrate two partial cut views of an example of the rotor 1 according to the invention. It is important to note that the representation of the electrical connecting assembly 10 is purely schematic in Figures 3 and 4.

The electrical connecting assembly 10 comprises an axial electrical conductor 120 and a radial electrical conductor 130.

On one hand, the axial electrical conductor 120 is electrically connected to the respective slip ring 110 and passes through an axial bore 41 of the rotor shaft 4. In other words, the rotor shaft 4 has an axial bore 41 configured to be traversed by the axial electrical conductor 120. Hence, the electrical connecting assembly 10 is advantageously arranged within the rotor shaft 4, which allows to reduce the cumbersomeness of the rotor. The axial bore 41 of the rotor shaft 4 may then be further filled with a potting material, for instance a resin, but not necessarily.

On another hand, the radial electrical conductor 130 is electrically connected to the respective end 31 of the field coil 3 and passes through a radial bore 42 of the rotor shaft 4. More specifically, the radial bore 42 has an opening at a distance from the respective end 31 of the field coil 3, so that the radial electrical conductor 130 is able to face the respective end 31 of the field coil 3.

In particular, in the configuration of the rotor having two slip rings, the rotor shaft 4 may comprise two radial bores 42 both configured to be traversed by one of two radial electrical conductors 130. Besides, it can be noted that the radial bore 42 may be directed substantially in a radial direction, but not necessarily. In fact, the radial bore 42 may also be skewed and thus may present an angle with the axis of rotation of the rotor, if appropriate. The shape of the radial electrical conductor should be adapted accordingly.

The axial electrical conductor 120 and the radial electrical conductor 130 are two separate pieces configured to be electrically connected together. Using two separate pieces gives the substantial advantage of not having to use deformable electrical connectors for the electrical connection between the slip rings and the field coil. In fact, in the state-of-the-art technology, a conventional solution is to use a wire passing through an inner channel of the rotor shaft, which would have to be shaped inside the rotor shaft during its insertion. And this shaping operation involves complex manual steps. In a general manner, deformable electrical connectors are more complex to shape, to mount, and to keep stably fixed through the in-service life of the rotor, especially when the rotor rotates at high speeds. The invention thus considerably facilitates the manufacturing of the rotor by easing the setting up of the electrical connection between the field coil and the slip rings for an electrical connection passing through the rotor shaft. Consequently, the related time and cost of production of the rotor are reduced. The invention also provides a more stable positioning of the electrical connection between the field coil and the slip rings through the in-service life of the rotor.

The axial electrical conductor 120 and the radial electrical conductor 130 may be for instance screwed, clutched, welded, soldered, pressed and/or crimped together.

Moreover, one of the two covers 5 located at one of the two axial ends of the rotor body 2 may advantageously cover both the field coil 3 and the radial electrical conductor 130.Then, the potting material 6 preferably fills free space between the respective cover 5 and the field coil 3. The potting material 6 thus contributes both to fix the field coil, and to secure the electrical connection between the radial electrical conductor 130 and the respective end 31 of the field coil 3.

In the configuration in which the rotor 1 has two slip rings 110, the two axial electrical conductors 120 and the two radial electrical conductors 130 of the two electrical connecting assemblies 10 may preferably be accommodated on two substantially diametrically opposed locations of the rotor shaft 4. Doing so contributes to maintaining a weight balance of the rotor.

The axial electrical conductor may have a rectangular section, namely the axial electrical conductor is a flat conductor, which may commonly be referred as a busbar. For instance, the axial electrical conductor can be shaped as a stripe. Besides, the axial electrical conductor is advantageously made out of a material comprising copper.

The axial electrical conductor 120 may be directly electrically connected to the respective slip ring 110, for example without using a coupling element. Then, there is no need of an additional assembling process between the corresponding slip ring and the axial electrical conductor 120. The electrical connection between the slip ring and the axial electrical conductor is consequently more robust through the in-service life of the rotor.

In a preferred manner, the at least one slip ring 110 and the axial electrical conductor 120 are at least partially embedded in a holding element 141. The holding element 141 is advantageously made out of an insulation material, for instance a plastic material or a resin. Then, the at least one slip ring 110, the axial electrical conductor 120, and the holding element 141 especially form together a slip ring assembly 140. The at least one slip ring 110 shall then be mounted on the rotor shaft 4 through the slip ring assembly 140. The use of the slip ring assembly 140 allows to have a standardized sub-assembly which is easier to mount on the rotor shaft, and allows at a same time to ensure the electrical insulation between the at least one slip ring and the rotor shaft, and between the axial electrical conductor and the rotor shaft. Moreover, the slip ring assembly 140 provides advantageously a mechanical holding of the at least one slip ring 110 and of the axial electrical conductor 120, which thus improves the stability of the electrical connection through the in-service life of the rotor. Moreover, thanks to the slip ring assembly, there is no need of using an additional potting material to fix the axial electrical conductor, although a potting material could be used, if appropriate.

In addition, inserting the slip ring assembly 140 may be performed in a unidirectional manner along the axis X of rotation. This further helps the automation of the process of setting up the electrical connection between the slip rings and the field coil, and thus to limit manual operations, which are generally more costly and delicate to conduct.

Figure 5 shows a schematic example of the slip ring assembly 140 for the configuration in which the rotor has two slip rings 110. The two slip rings 110 and the two axial electrical conductors 120 may be at least partially embedded in the holding element 141. Then, the two slip rings 110, the two axial electrical conductors 120, and the holding element 141 especially form together the slip ring assembly 140. The slip ring assembly 140 eases the manufacturing of the rotor, as there is a reduced number of pieces to be mounted on the rotor shaft, compared to a conventional solution in which all the slips rings and the electrical connectors would have been separate pieces. Moreover, the slip rings and the axial electrical conductors are advantageously more stably fixed thanks to the holding element 141.

The at least one slip ring 110 and the axial electrical conductor 120 may advantageously be overmolded with an insulation material such that to form the slip ring assembly 140.

The slip ring assembly 140 and/or the radial electrical conductor 130 may preferably be substantially rigid. Substantially rigid components are easier to mount and provide a more stable positioning of the electrical connecting assembly through the in-service life of the rotor.

Figure 6 illustrates a schematic example of the radial electrical conductor 130. The radial electrical conductor 130 may comprise a protruding portion 132 projecting from a radial portion 131 of the radial electrical conductor 130 and towards the field coil 3. Then, the radial electrical conductor 130 is connected to the respective end 31 of the field coil 3 at an axial position of the field coil 3. The use of the protruding portion 132 gives the advantage that the electrical connection between the respective end 31 of the field coil 3 and the radial electrical conductor 130 is closer to the field coil. Thus, the length of the respective end 31 of the field coil 3 is advantageously reduced.

The radial electrical conductor may have a circular or a rectangular section. Besides, the radial electrical conductor is advantageously made out of a material comprising copper.

The radial electrical conductor 130 may advantageously be overmolded with an insulation material 133. The overmolded radial electrical conductor allows to ensure the electrical insulation between the rotor shaft and the radial electrical conductor. Alternatively, other insulation means may be arranged either surrounding the radial electrical conductor or within the radial bore of the rotor shaft for the electrical insulation between the radial electrical conductor and the rotor shaft.

Furthermore, the radial electrical conductor 130 and the respective end 31 of the field coil 3 may be crimped, welded, soldered, pressed, screwed and/or clutched together.

The invention also concerns a method for producing the rotor as described previously, the method comprising inserting the axial electrical conductor 120 and the radial electrical conductor 130 respectively within the axial bore 41 of the rotor shaft 4 through an opening of the axial bore 41 on the axial end of the rotor shaft 4, and within the radial bore 42 of the rotor shaft. Then, after inserting the axial electrical conductor 120 and the radial electrical conductor 130, the method comprises electrically connecting the axial electrical conductor 120 and the radial electrical conductor 130 together, and the radial electrical conductor 130 and the respective end 31 of the field coil 3 together.

Although embodiments have been described with reference to a number of illustrative embodiments thereof, it should be understood that numerous other modifications and embodiments can be devised by those skilled in the art that will fall within the spirit and scope of the principles of this disclosure.

## Claims

1. A rotor (1) for a rotary electric machine (M), the rotor (1) comprising:
- a rotor shaft (4) configured to rotate around an axis (X) of rotation;
- a rotor body (2) formed of a stack of laminations and being configured to be mounted coaxially on the rotor shaft (4);
- a field coil (3) wound around the rotor body (2);
- at least one slip ring (110) mounted on the rotor shaft (4) and configured to exchange electric power with an external power supply,
**characterized in that** each of the at least one slip ring (110) is electrically connected to an end (31) of the field coil (3) through an electrical connecting assembly (10) comprising an axial electrical conductor (120) and a radial electrical conductor (130),
the axial electrical conductor (120) being electrically connected to the respective slip ring (110) and passing through an axial bore (41) of the rotor shaft (4), the radial electrical conductor (130) being electrically connected to the respective end (31) of the field coil (3) and passing through a radial bore (42) of the rotor shaft (4),
the axial electrical conductor (120) and the radial electrical conductor (130) being two separate pieces configured to be electrically connected together.

2. The rotor (1) as claimed in the previous claim, wherein the axial electrical conductor (120) is directly electrically connected to the respective slip ring (110).

3. The rotor (1) as claimed in any of the preceding claims, wherein the at least one slip ring (110) and the axial electrical conductor (120) are at least partially embedded in a holding element (141), the at least one slip ring (110), the axial electrical conductor (120), and the holding element (141) forming together a slip ring assembly (140).

4. The rotor (1) as claimed in the previous claim, wherein the slip ring assembly (140) is substantially rigid.

5. The rotor (1) as claimed in any of the preceding claims, wherein the radial electrical conductor (130) is substantially rigid.

6. The rotor (1) as claimed in any of the preceding claims, wherein the radial electrical conductor (130) comprises a protruding portion (132) projecting from a radial portion (131) of the radial electrical conductor (130) and towards the field coil (3) such that the radial electrical conductor (130) is connected to the respective end (31) of the field coil (3) at an axial position of the field coil (3).

7. The rotor (1) as claimed in any of the preceding claims, wherein the radial electrical conductor (130) is overmolded with an insulation material (133).

8. The rotor (1) as claimed in any of the preceding claims, wherein the axial electrical conductor (120) and the radial electrical conductor (130) are screwed, clutched, welded, soldered, pressed and/or crimped together.

9. The rotor (1) as claimed in any of the preceding claims, wherein the radial electrical conductor (130) and the respective end (31) of the field coil (3) are crimped, welded, soldered, pressed, screwed and/or clutched together.

10. The rotor (1) as claimed in any of the preceding claims, wherein the rotor (1) comprises two slip rings (110) and two electrical connecting assemblies (10) electrically connecting respectively the corresponding slip ring (110) to the corresponding end (31) of the field coil (3), the two axial electrical conductors (120) and the two radial electrical conductors (130) of the two electrical connecting assemblies (10) being accommodated on two substantially diametrically opposed locations of the rotor shaft (4).

11. The rotor (1) as claimed in the previous claim combined with claim 4, wherein the two slip rings (110) and the two axial electrical conductors (120) are at least partially embedded in the holding element (141), the two slip rings (110), the two axial electrical conductors (120), and the holding element (141) forming together the slip ring assembly (140).

12. The rotor (1) as claimed in any of the preceding claims, wherein the rotor (1) comprises a cover (5) located at an axial end of the rotor body (2) such that to cover the field coil (3) and the radial electrical conductor (130), and a potting material (6) which fills free space between the cover (5) and the field coil (3).

13. A rotary electric machine (M) for driving an electric or a hybrid vehicle (EV), the rotary electric machine (M) comprising the rotor (1) according to any of the preceding claims.

14. An electric or a hybrid vehicle (EV) driven by the rotary electric machine (M) according to the previous claim.
